# EUROPEAN PATENT APPLICATION

(11) **EP 0 907 138 A2**
(43) Date of publication of application: **07.04.1999**
(21) Application number: 98118231.4
(22) Date of filing: 25.09.1998
(51) Int. Cl.: G06K 7/10

(54) **Off-axis object detection system for a portable bar code scanner**

(30) Priority: 01.10.1997 US 944010
(71) Applicant: PSC Scanning, Inc., Eugene, Oregon 97402-9120 (US)
(72) Inventor: Colley, James E., Junction City, Oregon 97488 (US); O'Donnell, Patrick M., Eugene, Oregon 97478 (US)
(74) Representative: Viering, Jentschura & Partner

(57) **Abstract**

A data reader and a method of operation thereof, for reading objects such as barcode labels on consumer products. The data reader, such as fixed or portable scanner, includes an object sensor incorporated therein, the sensor detecting the presence of an object in an object detection volume. Object detection serves as a trigger to activate the scanner when it has entered a sleep or power conservation mode. The object detection volume is substantially distinct from the scan volume and positioned so that the usual path of objects moved through the scan volume passes through the object detection volume before passing through the scan volume. In this way the scanner may be activated prior to the arrival of the object in the scan volume, thereby ensuring that the barcode scanner is properly activated, initialized, and/or stabilized when the object enters the scan volume and/or facilitating object positioning within the scan volume.

## Description

This application is a continuing application of provisional application Serial No. 60/027,532 filed October 7, 1996.

### Background

The field of the present invention relates to data readers or more particularly barcode scanners such as a stand mounted portable barcode scanner incorporating an object detection system.

From an operational point of view, there are essentially two types of barcode scanners, fixed and portable. In a fixed barcode scanner, objects are moved to a stationary barcode scanner for scanning. In the portable type of barcode scanner, a movable barcode scanner is moved to the barcode label to be read. For purposes of this description, the term "scanner" shall herein denote a scanner of the spot scanning type, wherein an illumination spot is moved across a barcode, or a line scanner imaging type, wherein an image of a barcode is produced on a multi-element photodetector array such as a CCD. Further, scanners described herein may utilize various of scan patterns comprising any number of scan lines in configurations suitable for barcode scanning applications and projected through any number of scan windows. Further details regarding scan lines, scan patterns, and scan windows may be found in U.S. application Serial Nos. 60/010,935 and 08/792,829 entitled "Multi-Aperture Data Reader for Multi-Mode Operation" and U.S. application Serial Nos. 60/021,783 and 08/887,244 entitled "Barcode Scanner with a Manually Adjustable Scan Pattern", both being hereby incorporated by reference as if fully set forth herein.

In certain applications it is desirable to have both fixed and portable scanning capability available at the scanning location (for example, a retail checkout counter). One method is to provide the checkout counter with two scanners, namely both a fixed counter-mounted or countertop scanner and a portable scanner. Another method is to provide a mount or stand into which a portable scanner may be placed for use as a fixed scanner.

Portable barcode scanners do not typically operate continuously, but rather require a switch to be activated. When used as a portable barcode scanner, a trigger may be manually actuated by an operator by actuating some sort of switch. The present inventors have recognized that for fixed operation (also referred to as "hands-free" operation), manual triggering of the portable scanner is impractical and undesirable. Since portable scanners may comprise wireless devices with on board power sources, continuous operation while placed in the stand may also be undesirable. Thus upon a given condition such as no bar code having been scanned for a preset time, a scanner goes into a sleep mode or power conservation mode whereby various components are shut down or placed in a standby condition. Once in the sleep mode, the scanner need be re-activated.

The present inventors have recognized that there is typically a brief but non-negligible time period following activation of a fixed scanner (or a portable scanner operating in a fixed mode) during which the scanner is not able to perform barcode scanning. This time lag may be due to one or more of the following: time required for activation of an illumination source for barcode scanning and/or object placement; time required for activation of and/or stabilization of a scan engine, rotating facet wheel, or dithering assembly; time required for activation, initialization, and/or stabilization of detector(s), electronics, hardware, and/or software.

### Summary of the Invention

The present invention relates to a method of data reading and a data reading device, fixed or portable, having an object detection sensing volume which is substantially distinct from the scan volume, a preferred configuration comprising a stand-mounted portable barcode scanner having a an object sensor incorporated therein. The sensor may be an optical, infrared, or thermal sensor, and is configured to detect changes in the incident optical, infrared, or thermal intensity, respectively, emanating from an object detection volume. Any detected change in incident intensity is interpreted as detection of an object, and object detection serves as a trigger to activate the scanner. The object detection volume may be substantially distinct from the scan volume and positioned so that the usual path of objects moved through the scan volume passes through the object detection volume before passing through the scan volume. In this way the scanner may be activated prior to the arrival of the object in the scan volume, thereby ensuring that the barcode scanner is properly activated, initialized, and/or stabilized when the object enters the scan volume. Also, object positioning may be achieved more quickly because the operator can use the scanner light source to help determine the proper object position for scanning.

### Brief Description of the Drawings

Fig. 1 is a side view of a stand mounted portable barcode scanner incorporating an object detection system according to a preferred embodiment showing substantially distinct object detection and scan volumes;
Fig. 2 is an exploded view of a portable barcode scanner incorporating an object detection system according to a preferred embodiment showing the location of the object detection sensor;
Fig. 3 is a circuit diagram of a window comparator circuit for an object detection system according a preferred embodiment;
Fig. 4 illustrates an alternate portable barcode scanner supported by a stand for recharging, wireless communication, and fixed scanning.

### Detailed Description of the Preferred Embodiments

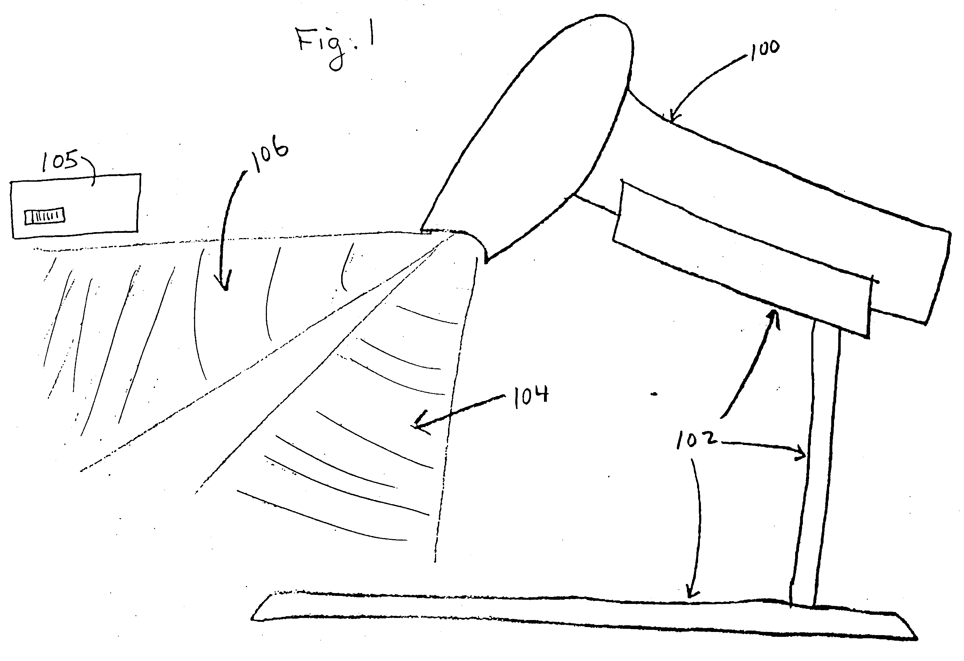

Figs. 1-2 illustrate a preferred embodiment of a stand mounted portable barcode scanner incorporating an object detection system. Fig. 1 illustrates a portable scanner 100 mounted in a stand 102 for fixed scanning. The stand 102 provides mechanical support for portable scanner 100 when it is operated as a fixed scanner, but may also house additional hardware such as: wireless communication hardware for a wireless portable scanner; recharging hardware for a rechargeable on-board power source for a wireless portable scanner; and data transmission and/or storage hardware.

Further details of a suitable stand for a portable scanner are disclosed in U.S. design patent no. D350,127 hereby incorporated by reference. Alternately the handheld scanner may be inserted into a holder which houses additional hardware for modifying the scan pattern such as from single line scanning to a complex scan pattern. Such systems are disclosed in U.S. Patent No. 5,214,270 herein incorporated by reference.

Referring to Fig. 1, the scan volume 104 is positioned substantially below scanner 100, while an object detection volume 106 is shown substantially in front of scanner 100. Detection of an object within detection volume 106 serves to activate the scanner 100 from an off condition or a sleep or power conservation mode. The scanner system in the fixed condition is configured such that the typical motion of the operator (not shown) is to move objects first through detection volume 106 and then into scan volume 104. Detecting movement of an object through the detection volume 106 prior to the object's arrival in scan volume 104 provides some lead time for the activation cycle thereby allowing full activation of scanner 100 prior to the object's arrival in scan volume 104. Movement of the operator's hand and/or arm into object detection volume 106 may also serve to activate scanner 100 as the object is moved through object detection volume 106 into scan volume 104.

Object detection and subsequent triggering of the scanner 100 prior to arrival of the object in scan volume 104 ensures that the barcode scanner 100 may be properly activated, initialized, and/or stabilized once the object enters scan volume 106, including but not limited to one or more of the following functions: activation and/or stabilization of an illumination source for barcode scanning and/or object placement; activation and/or stabilization of a scan engine, rotating facet wheel, or dithering assembly; activation, initialization, and/or stabilization of detector(s), electronics, hardware, and/or software; activation of aiming beams or other object positioning facilitator. Such activation of scanner 100 prior to arrival of the object in scan volume 104 may thus minimize the time required to achieve a successful read of a barcode on the object.

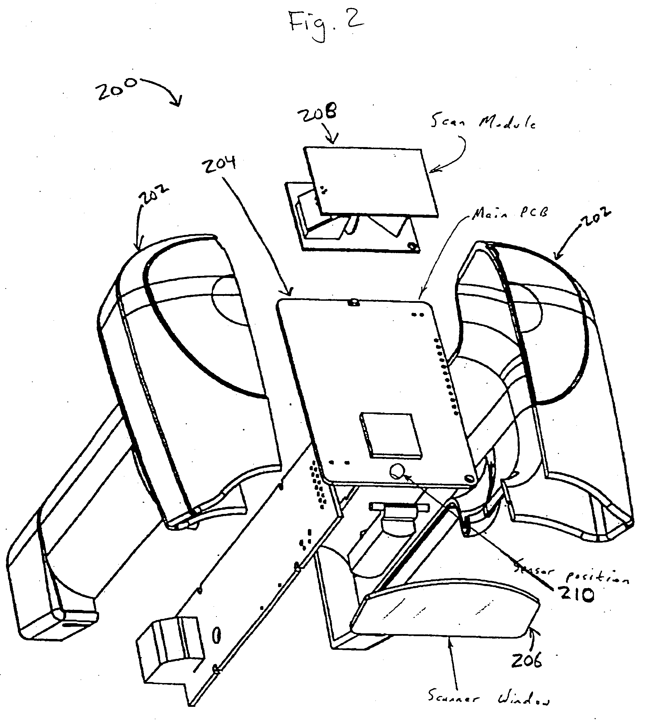

Fig. 2 depicts a preferred location of an object detection sensor 210 within a portable barcode scanner 200. The portable scanner 200 comprises a housing 202, a main printed circuit board 204, a scan window 206, a scan module 208, and an object detection sensor 210. The object detection sensor 210 preferably comprises a cadmium sulfide (CdS) photosensitive resistor. CdS was chosen for its high sensitivity in the visible region, low cost, directional response, and relatively slow response time. The CdS sensor may be operated as a passive sensor, i.e., no active light source is required, but only ambient illumination. Relatively slow response time is desirable so that the object detection system is insensitive to variations in ambient illumination due to modulation by the AC line frequency of room lighting. The sensor 210 is mounted in an orientation so that it detects light emanating from detection volume 106.

The object detection volume 106 is the region or volume where the sensor 210 is capable of sensing an object. The scan volume 104 is the region or volume where the scanner 100 has reading capability, for example being able to successfully scan a bar code label. The object detection volume 106 is preferably substantially distinct from the scan volume 104 which means that a significant portion of the object detection volume 106 does not overlap with the scan volume 104. For example in Fig. 1, the object detection volume 106 does not overlap at all with the scan volume 104, i.e., it is entirely distinct. On the other hand, the object detection volume 106 may be relatively large, entirely encompassing or overlapping the scan volume 104, as long as a significant portion of the object detection volume 106 does not overlap with the scan volume 104 and lies outside thereof.

A significant portion of the object detection volume 106 lies outside the scan volume 104 and is positioned so that an object being moved along a usual path to and through the scan volume 104 is first passed through the significant (non-overlapping) portion of the object detection volume 106. In Fig. 1 for example, it is anticipated that an object 105 bearing a barcode to be scanned would typically be brought into the scan volume 104 from the left as viewed in the figure. Thus the object 105 first enters the object detection volume 106, upon which the sensor 210 detects the presence of the object which then prompts the scanner 100 into operation mode.

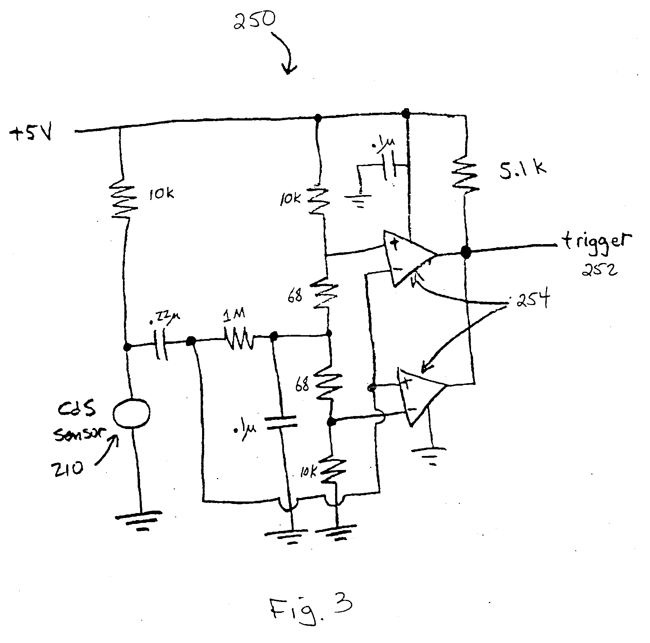

Fig. 3 depicts a window comparator circuit 250 employed in a preferred embodiment of an object detection system. A CdS sensor 210 is shown as a component of comparator circuit 250. Changes in the level of illumination of sensor 210 change its resistivity, thereby changing the voltage level across sensor 210. Changes in this voltage level, either positive or negative, are detected by comparator circuit 250 which in turn generates trigger signal 252. In order to achieve sufficiently high sensitivity without adding amplification (which adds cost, reduces reliability and requires board area), the window comparator threshold voltages are preferably very close to one another, with the sensor signal voltage in the absence of external optical stimuli centered between them. The comparator 250 must therefore be chosen such that the total offset, due to input offset voltage, input bias current through unequal source impedances, and input offset current, is small relative to half the voltage difference between the thresholds. To ensure proper operation of circuit 250 with high sensitivity, operational amplifiers 254 having relatively low input bias current are employed, since the source impedance driving each comparator input is vastly different. A preferred embodiment of circuit 250 employs FET input operational amplifiers (for example, TLC393CD operational amplifiers).

The object detection sensor 210 may comprise any of a variety of sensors including but not limited to: a thermal sensor, an infrared sensor, an optical sensor, and/or functional equivalents thereof. These sensors may include but are not limited to: photovoltaic, photoconductive, photomultiplier, pyroelectric, piezoelectric, single crystal, and/or functional equivalents thereof. Detection circuitry substantially equivalent to comparator circuit 250 may be employed with any of these sensors. For an object sensor configured to detect changes in ambient light level, for example, performance is best when increases in light level (due to the object reflecting ambient light to the sensor) and decreases in light level (due to the object blocking the path from the ambient light source and the detector) are both detected. The performance of the object detection system is then much less affected by the position of the scanner with respect to the position of the ambient light source(s).

The comparator circuit 250 may comprise any circuit for detecting both positive and negative changes in a signal voltage, or functional equivalents thereof.

The scanner 100 may comprise a barcode scanner of the spot scanning type, wherein an illumination spot is moved across a barcode, or a line scanner imaging type, wherein an image of a barcode is produced on a multi-element photodetector array. Further, the portable scanner 100 may utilize any suitable scan pattern comprising any number of scan lines for a configuration suitable for barcode scanning applications and projected through any number of scan windows. Further details regarding scan lines, scan patterns, and scan windows may be found in application Serial Nos. 60/010,935, 08/792,829, 60/021,783 and 08/887,244 cited hereinabove.

Alternately, the object sensor 210 may also be mounted on the stand 102 instead of on the scanner 100.

In another alternative embodiment, the portable scanner 100 may be used for fixed operation without the use of a stand 102. Alternately the stand may be incorporated into the scanner itself such as disclosed in U.S. Patent 5,274,219 entitled "Handheld Laser Scanner with Built-In Stand" which is hereby incorporated by reference. Alternately, the scan volume 104 and object detection volume 106 may assume any position and/or orientation with respect to scanner 100 that is suitable for scanning applications.

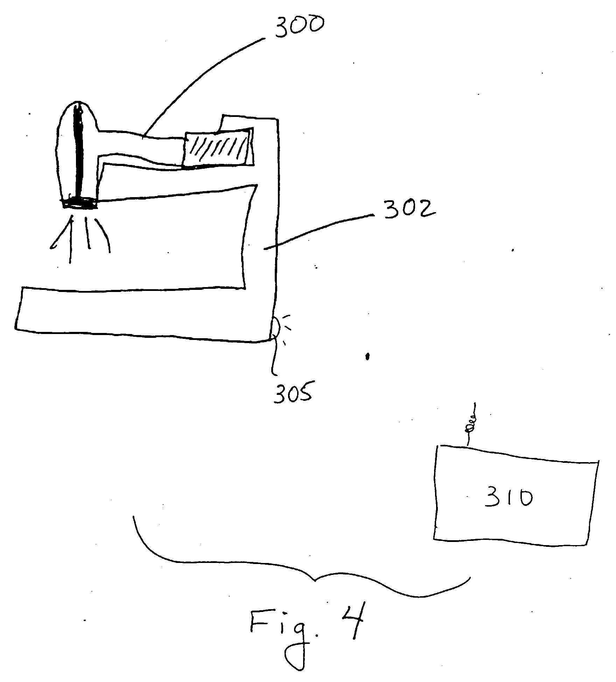

In an alternative embodiment, the stand 102 may house one or more of the following in addition to providing mechanical support for portable scanner 100 when operated as a fixed scanner: wireless communication hardware for a wireless portable scanner; recharging hardware for an rechargeable on board power source for a wireless portable scanner; data transmission and/or storage hardware. Fig. 4 illustrates a wireless portable scanner 300 supported by a stand 302. The stand 302 holds the portable scanner 300 in a position which allows the scanner 300 to be used as a fixed scanner. The stand 302 includes recharging hardware for recharging an on-board power supply included in scanner 300. The scanner 300 and stand 302 also contain wireless communication hardware, including a transmitter 305, for transmitting electronic signals between the scanner 300 and a barcode reading system such as a host computer 310 (in a configuration where the scanner 300 is an integrated unit including a decoder) or a reader/decoder terminal 310 (in a configuration where the scanner 300 is a non-integrated unit which sends an undecoded signal). When used as a portable scanner, the scanner 300 draws power from an on-board power supply, while electronic signals are transmitted between scanner 300 and a barcode reading system 310 via the wireless communication hardware in scanner 300 and stand 302. When placed in stand 302, scanner 300 draws power from the stand for fixed scanning operation and for recharging an on board power supply. Communication may continue to occur via the wireless communication hardware in scanner 300 and stand 302.

Alternately, various forms of wireless communication may be used, including but not limited to RF (radio frequency), IR (infrared), or other forms of wireless communication.

Communications between the scanner 300 and a barcode reading system may occur via a hardwired connector between scanner 300 and stand 302 when scanner 300 is placed in stand 302 for fixed operation. The hardwired connection may be the same connector utilized for recharging, or may comprise a distinct connector. The connection between the scanner 300 and the stand 302 for either signal transmission or recharging may be any suitable connection such as a metal contact type connection or an induction-type connection.

The portable scanner may store data collected during portable operation and transfer the data to the barcode reading system via direct connection when the scanner 300 is placed in stand 302 for fixed operation. The direct connection may be the same connection utilized for recharging, or may comprise a distinct connector.

The on-board power supply in scanner 300 may comprise replaceable or rechargeable batteries. If replacement batteries are used, then recharging hardware may be omitted from stand 302.

The scanner 100 may alternately comprise a fixed scanner having one or more scanner windows such as the scanner described in U.S. Patent No. 5,475,207 herein incorporated by reference.

Thus in a preferred application, a system according to one or more of the preferred embodiments described above may provide one or more of the following advantages:
-- to provide an object detection system for a barcode scanner;
-- to provide an object detection system for a barcode scanner wherein an object is detected by detecting changes in the signal level of an optical sensor;
-- to provide an object detection system for a barcode scanner wherein an object is detected by detecting changes in the signal level of an infrared sensor;
-- to provide an object detection system for a barcode scanner wherein an object is detected by detecting changes in the signal level of a thermal sensor;
-- to provide an object detection system for a barcode scanner wherein object detection serves as a trigger to activate the barcode scanner;
-- to provide an off-axis object detection system for a barcode scanner wherein the object detection volume is substantially distinct from the scan volume; and
-- to provide an off-axis object detection system for a barcode scanner wherein object detection in an object detection volume which is substantially distinct from a scan volume serves as a trigger to activate the barcode scanner before the object enters the scan volume, thereby enhancing the probability that the barcode scanner will be properly activated, initialized, and/or stabilized when the object enters the scan volume and/or facilitating object positioning within the scan volume.

Though the present invention has been set forth in the form of its preferred embodiments, it is nevertheless intended that modifications to the systems and methods may be made without departing from inventive concepts set forth herein. The invention therefore is not to be limited except in the spirit of the claims that follow.

## Claims

1. A method of operating a data reader comprising the steps of
scanning objects being moved through a scan volume;
detecting an object entering an object detection volume, the detection volume being substantially distinct from the scan volume and positioned so that an object being moved along a usual path to and through the scan volume passes through the object detection volume before passing through the scan volume;
activating the data reader upon detecting an object entering the object detection volume.

2. A method according to Claim 1 further comprising
switching the data reader from a normal operating mode to a power conservation mode upon a given condition of inactivity.

3. A method according to Claim 2 wherein the step of activating the data reader comprises switching the data reader from the power conservation mode to the normal operating mode.

4. A method according to Claim 1 further comprising
shutting down one or more operating elements of the data reader upon a given operational condition,
wherein the step of activating the data reader comprises reactivating the one or more operating elements.

5. A method according to Claim 1 further comprising
ensuring that the data reader is fully activated prior to the object entering the scan volume.

6. A method according to Claim 1 further comprising
ensuring that the data reader is properly activated, initialized, and/or stabilized once the object enters the scan volume.

7. A method according to Claim 1 further comprising facilitating object positioning within the scan volume.

8. A method according to Claim 1 or 16 wherein a significant portion of the object detection volume is positioned to one side of the scan volume.

9. A method according to Claim 1 or 12 or 16 wherein the object detection volume does not overlap at all with the scan volume.

10. A method according to Claim 1 or 12 or 16 wherein the object detection volume is entirely distinct from the scan volume.

11. A method according to Claim 1 or 16 wherein the object detection volume entirely overlaps the scan volume.

12. A method of reading objects comprising the steps of
scanning objects being moved through a scan volume;
detecting an object entering an object detection volume, the detection volume having a substantial portion which is distinct from the scan volume;
commencing the step of scanning objects upon detecting an object entering the object detection volume.

13. A method of reading objects according to Claim 12 further comprising
positioning the object detection volume such that an object being moved along a usual path to and through the scan volume passes through the object detection volume prior to passing through the scan volume.

14. A data reading system comprising
a scanner having a scan volume in which objects may be scanned;
a sensing device having an object detection volume in which presence of an object may be detected,
wherein detection of an object within the detection volume serves to activate the scanner,
wherein the object detection volume is substantially distinct from the scan volume.

15. A data reading system according to Claim 14 wherein the object sensor comprises a cadmium sulfide (CdS) photosensitive resistor.

16. A data reading system according to Claim 14 wherein the scanner has a normal operating mode and a power conservation mode and wherein the scanner is switched from the power conservation mode to the normal operating mode upon detection of an object within the detection volume.
